# EUROPÄISCHE PATENTANMELDUNG

(11) **EP 2 865 472 A1**
(43) Veröffentlichungstag der Anmeldung: **29.04.2015**
(21) Anmeldenummer: 14190354.2
(22) Anmeldetag: 24.10.2014
(51) Int. Cl.: B23B 51/06, B23B 27/10, B23C 5/28, B23D 77/00, B23Q 11/10

(54) **Zerspanungswerkzeug und Verfahren zum Kühlen eines solchen**

(30) Priorität: 24.10.2013 DE 102013111741
(71) Anmelder: Jakob Lach GmbH & Co. KG, 63452 Hanau (DE)
(72) Erfinder: Maurer, Eugen, 61239 Ober-Mörlen (DE)
(74) Vertreter: Stoffregen, Hans-Herbert

(57) **Zusammenfassung**

Die Erfindung bezieht sich auf ein Zerspanungswerkzeug (10) wie Fräs- oder Bohrwerkzeug oder Reibahle, umfassend einen Werkzeugkörper (11) mit Spanbereich (13), wobei innerhalb des Werkzeugkörpers ein Kühlmittelzuführ- und -rückführkanal (16, 18) als Abschnitt eines geschlossenen Kühlmittelkreislaufs verlaufen. Um mit konstruktiv einfachen Maßnahmen im erforderlichen Umfang in den Bereichen des Werkzeugs eine energetisch günstige und umweltfreundliche Kühlung sicherzustellen, ist angegeben, dass von dem Kühlmittelzuführkanal (16) ein Expansionsraum zum Expandieren von über den Kühlmittelzuführkanal zugeführtem verflüssigten Gas als Kühlmittel ausgeht und von dem Expansionsraum der Kühlmittelrückführkanal ausgeht oder ein Abschnitt von ersterem ist, wobei Querschnitt QR des Kühlmittelrückführkanals größer als Querschnitt QZ des Kühlmittelzuführkanals ist.

## Beschreibung

Die Erfindung bezieht sich auf ein Zerspanungswerkzeug, wie Fräs- oder Bohrwerkzeug oder Reibahle, umfassend einen Werkzeugkörper mit Spanbereich, wobei innerhalb des Werkzeugkörpers ein Kühlmittelzuführ- und ein -abführkanal als Abschnitte eines geschlossenen Kühlmittelkreislaufs verlaufen, der sich bis in den Spanbereich erstreckt, wobei von dem Kühlmittelzuführkanal ein Expansionsraum zum Expandieren von über dem Zuführkanal zugeführtes verflüssigtes Gas als Kühlmittel ausgeht. Ferner bezieht sich die Erfindung auf ein Verfahren zum Kühlen von zumindest dem Spanbereich eines Zerspanungswerkzeuges, entlang dessen Längsachse ein Zuführ- und ein Rückführkanal als Abschnitte eines geschlossenen Kühlmittelkreislaufs verlaufen, wobei Zuführ- und Rückführkanal im Spanbereich miteinander verbunden sind, wobei dass dem Zuführkanal ein verflüssigtes Gas als Kühlmittel zugeführt wird, und wobei die Verbindung zwischen dem Zuführ- und dem Rückführkanal und/oder Volumen des Rückführkanals volumenmäßig in Bezug auf das zugeführte Kühlmittel derart ausgelegt werden, dass dieses teilweise verdampft.

In der EP 2 607 001 A1 ist ein Werkzeug, insbesondere ein Zerspanwerkzeug, mit einer innenliegenden Verdampferkühlung beschrieben. Die Verdampferkühlung weist zumindest einen im inneren des Werkzeugs oder in der Nähe des zu kühlenden Funktionsbereich einen Verdampfungsbereich auf, der zur Aufnahme von Wärme in einem mit diesem Bereich zumindest thermisch leitend verbundenen Funktionsbereich, wie etwa einer Schneide, geeignet ist. Der Verdampfungsbereich ist in Form einer Drossel ausgeführt.

Der EP 1 023 961 B1 ist ein Zerspanungswerkzeug zu entnehmen, mit dem Werkstücke aus Metall und Metalllegierungen, Keramik, holz-, kunst- oder zementgebundenen Spanplatten sowie Kunststoffen mit und ohne Glasfaser- oder Karbonfaserarmierung bearbeitet werden.

Um hohe Standzeiten zu erzielen, ist es nach der DE 10 2009 030 587 B3 bekannt, dass ein Zerspanungswerkzeug mit einem aus polykristallinem Diamant oder kubischem Bornitrid bestehenden Schneideinsatz über ein Kühlmittel gekühlt wird, das über einen in dem Werkzeugkörper geführten Kühlmittelkanal in einer Spanfläche des Schneideinsatzes mündet. Das Kühlmittel tritt aus dem Werkzeug aus, so dass sichergestellt sein muss, dass eine Belastung der Umgebung unterbleibt.

Der WO 95/29030 ist ein Rundlaufwerkzeug wie Bohrer zu entnehmen, in dessen Längsachse Kanäle eines in sich geschlossenen Kühlmittelkreislaufes verlaufen, die im Arbeitsende des Werkzeuges miteinander verbunden sind. Der Kühlmittelzuführ- und -rückführkanal verläuft innerhalb des Bohrers spiralförmig, wobei die Kanäle einen gleichen Querschnitt aufweisen.

Aus der DE 199 58 536 C2 ist ein Werkzeug bekannt, das einen nach außen geschlossenen Innenraum aufweist, in dem ein Kühlmittel vorhanden ist.

Gegenstand der DE 197 30 539 C1 ist ein Drehmeißel, der ein Kühlsystem mit Kanälen umfasst, über die ein Kühlfluid in den Bereich einer Schneide geführt wird. Hierzu ist innerhalb des Werkzeuges ein Kühlkörper aus einem gut wärmeleitfähigen Material angeordnet, der eine Mikrokanalstruktur aufweist. Als Kühlfluid kann Wasser verwendet werden. Der Kühlkörper selbst kann Teil eines geschlossenen Heat-Pipe-Systems sein.

Der vorliegenden Erfindung liegt die Aufgabe zu Grunde, ein Zerspanungswerkzeug sowie ein Verfahren zum Kühlen eines solchen derart weiterzubilden, dass mit konstruktiv einfachen Maßnahmen im erforderlichen Umfang in den Bereichen des Werkzeugs eine Kühlung erfolgen kann, in denen Materialien bearbeitet werden. Gleichzeitig soll sichergestellt sein, dass eine energetisch günstige Kühlung möglich ist, wobei Umweltbelastungen ausgeschlossen werden sollen.

Zur Lösung der Aufgabe sieht die Erfindung bei einem Zerspanungswerkzeug der eingangs genannten Art insbesondere vor, dass von dem Expansionsraum der Kühlmittelrückführkanal ausgeht oder ein Abschnitt von ersterem ist, wobei Querschnitt QR des Kühlmittelrückführkanals größer als Querschnitt QZ des Kühlmittelzuführkanals ist. Dabei kann der Expansionsraum auch zumindest bereichsweise der Kühlmittelrückführkanal sein.

Erfindungsgemäß nutzt man das Verdampfen bzw. Sublimieren eines verflüssigten Gases, um Wärme der Umgebung zu entziehen, also dem Bereich des Werkzeuges, mit dem eine Bearbeitung erfolgt bzw. in dem das Werkzeug geführt wird. Das expandierte Kühlmittel wird sodann über den Rückführkanal einem Kompressor zum erneuten Verflüssigen zugeführt, von dem das Kühlmittel in den Zuführkanal gelangen kann.

Um im gewünschten Umfang ein Entspannen und zumindest teilweises Verdampfen des verflüssigten Gases sicherzustellen, ist insbesondere vorgesehen, dass der Expansionsraum oder zumindest ein Abschnitt von diesem durch eine quer zur Längsachse des Werkzeugs verlaufende Bohrung gebildet ist. Dabei ist das Volumen des Expansionsraums zu dem wirksamen Querschnitt des Zuführkanals derart ausgelegt, dass das verflüssigte Gas zumindest teilweise verdampft.

In Weiterbildung der Erfindung ist vorgesehen, dass der Durchmesser des Kühlmittelzuführkanals im Bereich zwischen 0,5 mm und 1 mm, insbesondere in etwa 0,8 mm liegt. Der Durchmesser des Kühlmittelrückführkanals kann bis 1/3 des Durchmessers des Werkzeugkörpers, insbesondere zwischen 1/4 bis 1/3 des Werkzeugköperdurchmessers betragen.

In hervorzuhebender Weiterbildung der Erfindung ist vorgesehen, dass Querschnitt des Kühlmittelzuführkanals oder dessen in dem Expansionsraum mündende Öffnung querschnittsmäßig veränderbar ist. Hierzu ist insbesondere vorgesehen, dass über ein den Expansionsraum außenseitig verschließendes Verschlusselement der Querschnitt der Öffnung einstellbar ist. Das Verschlusselement kann eine Schraube sein, die eine Freifläche einer Schneide des Werkzeugs durchsetzt. Expansionsraumseitig kann das Verschlusselement als Kegel ausgebildet sein, dem ein Kegelsitz zugeordnet ist, der von dem Kühlmittelzuführkanal durchsetzt ist. In Abhängigkeit von der Stellung des Verschlusselementes ist die den Kegelsitz durchsetzende Öffnung des Kühlmittelzuführkanals mehr oder weniger verschlossen. Hierdurch besteht die Möglichkeit, die Menge des in den Expansionsraum strömenden gasförmigen Kühlmittels derart einzustellen, dass im gewünschten Umfang ein Verdampfen und damit Kühlen des Werkzeuges erfolgt.

Ein Verfahren der eingangs genannten Art zeichnet sich dadurch aus, dass zur Einstellung des zuzuführenden verflüssigten Gases der Querschnitt QZ des Kühlmittelzuführkanals oder dessen in dem Expansionsraum mündende Öffnung querschnittsmäßig verändert wird.

Insbesondere ist vorgesehen, dass als Kühlmittel verflüssigtes CO2 verwendet wird. Dabei sollte das verflüssigte CO2 mit einer Temperatur mit 10 °C ≤ T < TK mit TK = kritische Temperatur, insbesondere 10 °C ≤ T 30 °C, bevorzugterweise TR ≤ T ≤ 30 °C mit TR = Raumtemperatur dem Zuführkanal zugeführt werden. Kritische Temperatur bezeichnet die Temperatur, unterhalb der CO2 verflüssigt werden kann.

Des Weiteren sollte das verflüssigte CO2 mit einem Druck P mit 20 bar ≤ P ≤ 70 bar, insbesondere 20 bar ≤ P ≤ 60 bar, insbesondere 50 bar ≤ P ≤ 60 dem Expansionsraum zugeführt werden.

Insbesondere sollte der Expansionsraum, der erwähntermaßen auch den Kühlmittelrückführkanal mit einschließen kann, jedoch nicht muss, derart dimensioniert werden, dass die Möglichkeit besteht, dass sich das pro Zeiteinheit zugeführte verflüssigte Gas um den Faktor F mit 20 ≤ F ≤ 50 ausdehnen kann.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Seitenansicht eines Zerspanungswerkzeugs,
- Fig. 2: einen Schnitt der Linie A-A in Fig. 1,
- Fig. 3: einen Querschnitt durch das Werkzeug gemäß Fig. 1,
- Fig. 4: ein Detail B der Fig. 2 in vergrößerter Darstellung,

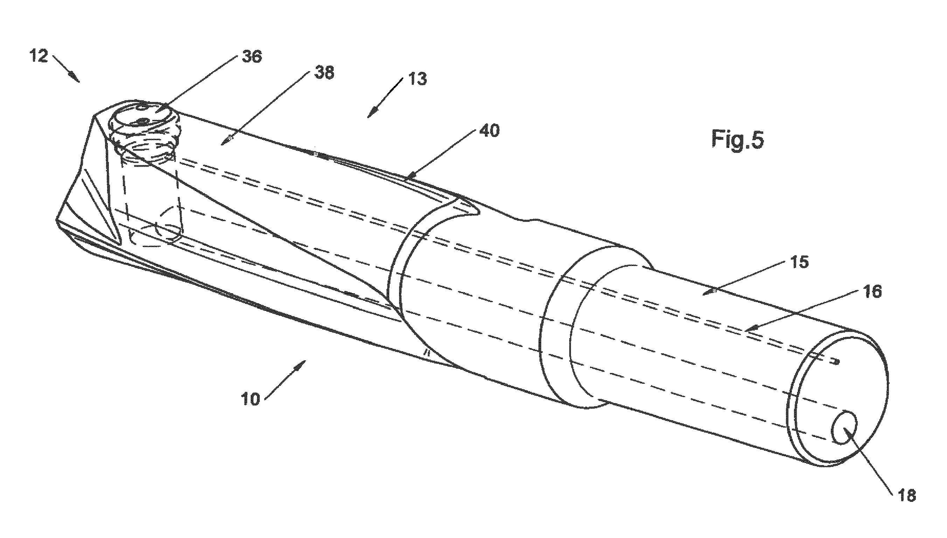

- Fig. 5: das Werkzeug gemäß Fig. 1 in dreidimensionaler Darstellung,
- Fig. 6: das in einem Kühlmittelkreislauf integrierte Werkzeug gemäß Fig. 1 und
- Fig. 7: eine Weiterbildung des Werkzeugs gemäß der Fig. 1 bis 5.

In den Figuren ist als Beispiel für ein Zerspanungswerkzeug ein Bohrer 10 dargestellt, ohne dass hierdurch eine Beschränkung der erfindungsgemäßen Lehre erfolgt. Vielmehr ist diese auf alle Zerspanungswerkzeuge anwendbar, wie z. B. auch auf Fräswerkzeuge oder Reibahlen.

Mit der erfindungsgemäßen Lehre sind entsprechende Werkzeuge in den Bereichen im erforderlichen Umfang kühlbar, in denen aufgrund des Bearbeitens hohe Temperaturen auftreten können. Eine Kühlung erfolgt aber auch in den Bereichen, in denen das Werkzeug geführt ist.

Erfindungsgemäß wird das Werkzeug mittels in einem geschlossenen Kreislauf geführten Kühlfluids gekühlt, das ein verflüssigtes Gas ist, insbesondere verflüssigtes CO2, gleichwenn auch andere verflüssigte Gase in Frage kommen, die die Eigenschaft aufweisen, dass ein Zuführen zum Werkzeug bei einer Temperatur von insbesondere weniger als 50 °C möglich ist, um sodann in einem Expansionsraum zumindest teilweise zu verdampfen.

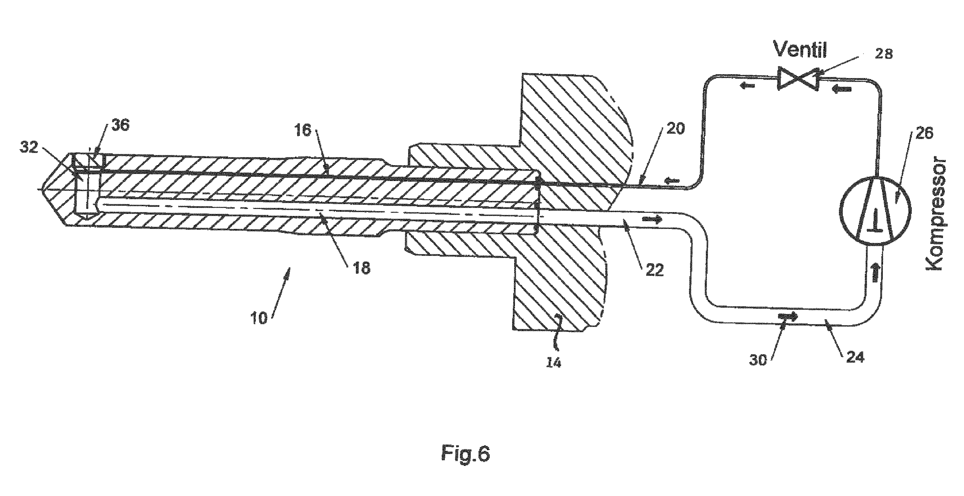

Ein entsprechend geschlossener Kreislauf ist der Fig. 6 zu entnehmen. In diesem ist das Werkzeug 10 mit dieses aufnehmendem Spannfutter 14 rein prinzipiell dargestellt. Innerhalb des Werkzeugs 10 verläuft ein Kühlmittelzuführkanal 16 sowie ein Kühlmittelrückführkanal 18, die über Anschlüsse 20, 22, die - abweichend von der zeichnerischen Darstellung - auch als Drehdurchgänge ausgebildet sein können, in eine Leitung 24 übergehen, in der ein Kompressor 26 sowie ein Entspannungsventil 28 angeordnet sind. Die Strömungsrichtung des Kühlmittels ist durch die Pfeile 30 symbolisiert.

Wie sich aus den Schnittdarstellungen ergibt, ist der Querschnitt des Zuführkanals 16 erheblich kleiner als der des Rückführkanals 18. Der Zuführkanal 16 kann z. B. einen Durchmesser zwischen 0,6 mm und 1 mm, vorzugsweise im Bereich von 0,8 mm und der Rückführkanal einen Durchmesser von 3 mm bis 6 mm, insbesondere im Bereich von 4 mm aufweisen, um nur beispielhaft Zahlen zu nennen.

Das Werkzeug 10 weist einen Werkzeugkörper 11 mit Schneiden auf. Dieser Bereich wird als Spanbereich 13 bezeichnet, der sich bis zum Stirnbereich 12 des Werkzeugkörpers 11 erstreckt, wie die zeichnerische Darstellung verdeutlicht. Gegenüberliegend weist der Werkzeugkörper 11 einen Schaft 15 auf, um das Werkzeug in eine Maschine einbauen zu können.

Im Stirnbereich 12 des Werkzeugs 10 sind die Kanäle 16, 18 über eine zumindest einen Abschnitt eines Expansionsraums bildende und quer zur Längsachse 34 des Werkzeugs 10 verlaufende Bohrung 32 verbunden, die über ein Verschlusselement wie Schraube 36 verschließbar ist. Die Bohrung 32 geht entsprechend der zeichnerischen Darstellung von einer Freifläche 38 einer Schneide 40 des Werkzeugs 10 aus.

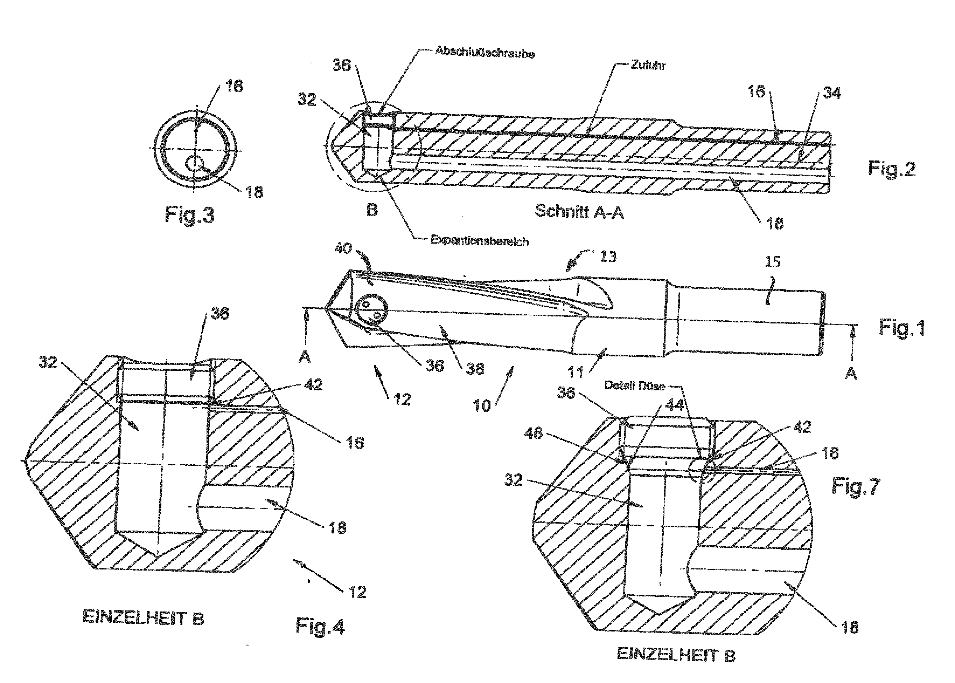

Wie insbesondere die Fig. 4 verdeutlicht, mündet der Zuführkanal 16 mit seiner Öffnung 42 in der Bohrung 32. Diese - ggfs. unter Einbeziehung des Rückführkanals 18 - ist dabei derart dimensioniert, dass das zuströmende flüssige Gas in einem Umfang expandieren kann, dass zumindest ein teilweises Verdampfen ermöglicht wird. Hierdurch kann dem Werkzeug 10 im erforderlichen Umfang Wärme entzogen werden, um die gewünschte Kühlung zu erreichen, die sicherstellt, dass das Werkzeug 10 formstabil bleibt und die erforderlichen Standzeiten erzielt werden können.

Durch die Dimensionierung des Rückführkanals 18 kann sich der Expansionsraum erkennbar von der Bohrung 32 ausgehend in diesen einen erstrecken, so dass hinreichend Volumen zur Verfügung steht, um das Sublimieren des Kühlfluids zu ermöglichen. Insbesondere sollten die Bohrung 32 und der Rückführkanal 18 volumenmäßig derart ausgelegt sein, dass sich das der Bohrung 32 zugeführte Kühlmittel um zumindest das 20-fache, vorzugsweise um das 30- bis 50-fache ausdehnen kann.

Da insbesondere bei Werkzeugen kleiner Durchmesser Grenzen in Bezug auf das Volumen der Bohrung 32 einerseits und dem minimalen Durchmesser des Zuführkanals 16 andererseits gegeben sind, sieht eine hervorzuhebende eigenerfinderische Weiterbildung vor, dass der Kühlmittelzuführkanal 16 querschnittsmäßig einstellbar ist. Hierdurch ergibt sich die Möglichkeit, die Menge des der Bohrung 32 und damit dem Expansionsraum zuzuführenden Kühlmittels derart einzustellen, dass hinreichend Volumen für eine Verdampfung des Gases zur Verfügung steht.

Entsprechend der Fig. 7 wird die Öffnung 42 des Zuführkanals 16 in dem Querschnitt mittels des als Schraube 36 ausgebildeten Verschlusselements der Bohrung 32 eingestellt. Hierzu weist die Schraube 36 innenseitig einen als Kegel ausgebildeten Abschnitt 44 auf, der an einem Kegelsitz 46 dichtend anliegt. Der Kegelsitz 46 wird von der Kühlmittelzuführleitung 16 durchsetzt, d. h., die Öffnung 42 verläuft im Kegelsitz 46. In Abhängigkeit davon, in welchem Umfang die Schraube 36 in die Bohrung 32 hinein- oder aus dieser herausgeschraubt ist, wird die Öffnung 42 mehr oder weniger verschlossen und somit die Menge des dem Expansionsraum zuzuführenden Kühlmittels verändert.

Andere Lösungsmöglichkeiten zur dosierten Abgabe des Kühlmittels an den Expansionsraum sind gleichfalls möglich, ohne dass hierdurch die erfindungsgemäße Lehre verlassen wird.

Bei CO2 als Kühlmittel sollte dieses dem Kühlmittelzuführkanal 16 bei einer Temperatur zwischen 20 °C und 30 °C und bei einem Druck zwischen 30 bar und 60 bar zugeführt werden. Hierdurch bietet sich die Möglichkeit, dass einerseits eine temperaturmäßige Belastung insbesondere der das Werkzeug 10 aufnehmenden Elemente einer Werkzeugmaschine temperaturmäßig nicht erfolgt. Andererseits wird aufgrund des Druckes die Möglichkeit gegeben, dass das flüssige Gas in einem Umfang verdampfen kann, dass der erforderliche Wärmeentzug aus dem Werkzeug 10 erfolgen kann.

## Patentansprüche

1. Zerspanungswerkzeug (10) wie Fräs- oder Bohrwerkzeug oder Reibahle, umfassend einen Werkzeugkörper (11) mit Spanbereich (13), wobei innerhalb des Werkzeugkörpers ein Kühlmittelzuführ- und -rückführkanal (16, 18) als Abschnitte eines geschlossenen Kühlmittelkreislaufs verlaufen, wobei von dem Kühlmittelzuführkanal (16) ein Expansionsraum zum Expandieren von über den Kühlmittelzuführkanal zugeführtem verflüssigten Gas als Kühlmittel ausgeht und von dem Expansionsraum der Kühlmittelrückführkanal (18) ausgeht oder ein Abschnitt von ersterem ist, wobei Querschnitt QR des Kühlmittelrückführkanals (18) größer als Querschnitt QZ des Kühlmittelzuführkanals (16) ist.

2. Zerspanungswerkzeug nach Anspruch 1,
**dadurch gekennzeichnet ,**
**dass** der Durchmesser des Kühlmittelzuführkanals (16) 0,5 mm bis 1,0 mm und/oder der Durchmesser des Kühlmittelrückführkanals (18) bis 1/3 des Durchmessers des Werkzeugkörpers (11), insbesondere zwischen 1/4 und 1/3 des Durchmessers des Werkzeugkörpers, beträgt.

3. Zerspanungswerkzeug nach Anspruch 1 oder 2,
**dadurch gekennzeichnet ,**
**dass** der Expansionsraum oder ein Abschnitt von diesem durch eine quer zur Längsachse (34) des Zerspanungswerkzeugs (10) verlaufende Bohrung (32) gebildet ist.

4. Zerspanungswerkzeug nach zumindest einem der vorhergehenden Ansprüche,
**dadurch gekennzeichnet ,**
**dass** das Volumen des Expansionsraums zu dem wirksamen Querschnitt des Kühlmittelzuführkanals (16) derart ausgelegt ist, dass das dem Expansionsraum zugeführte verflüssigte Gas zumindest teilweise verdampft.

5. Zerspanungswerkzeug nach zumindest einem der vorhergehenden Ansprüche,
**dadurch gekennzeichnet ,**
**dass** der Querschnitt QZ des Kühlmittelzuführkanals (16) oder dessen in dem Expansionsraum mündende Öffnung (42) querschnittsmäßig veränderbar ist.

6. Zerspanungswerkzeug nach zumindest einem der vorhergehenden Ansprüche,
**dadurch gekennzeichnet ,**
**dass** die den Expansionsraum oder ein Abschnitt von diesem bildende quer zur Längsachse (34) des Zerspanungswerkzeugs (10) verlaufende Bohrung (32) über ein insbesondere von einer Freifläche (38) einer Schneide (40) des Werkzeugs (10) ausgehendes Verschlusselement wie Schraube (36) verschließbar ist, über das der Querschnitt QZ des Kühlmittelzuführkanals bzw. dessen in den Expansionsraum mündende Öffnung (42) einstellbar ist.

7. Zerspanungswerkzeug nach zumindest einem der vorhergehenden Ansprüche,
**dadurch gekennzeichnet ,**
**dass** in dem den Kühlmittelzuführkanal (16) und den Kühlmittelrückführkanal (18) aufweisenden Kühlmittelkreislauf zumindest ein Kompressor (26) sowie ein Ventil (28) angeordnet sind.

8. Verfahren zum Kühlen von zumindest dem Spanbereich (13) eines Zerspanungswerkzeugs (10), mit vorzugsweise entlang dessen Längsachse verlaufendem Kühlmittelzuführ- und -rückführkanal (16, 18) als Abschnitte eines geschlossenen Kühlmittelkreislaufs, wobei der Kühlmittelzuführ- und der -rückführkanal im Spanbereich miteinander verbunden sind, wobei dem Kühlmittelzuführkanal (16) ein verflüssigtes Gas als Kühlmittel zugeführt wird und die Verbindung zwischen dem Kühlmittelzuführ- und -rückführkanal (16, 18) und/oder Volumen des Kühlmittelrückführkanals volumenmäßig in Bezug auf das zugeführte Kühlmittel derart ausgelegt sind, dass das Kühlmittel zumindest teilweise verdampft, und wobei zur Einstellung des zuzuführenden verflüssigten Gases der Querschnitt QZ des Kühlmittelzuführkanals (16) oder dessen in dem Expansionsraum mündende Öffnung (42) querschnittsmäßig verändert wird.

9. Verfahren nach Anspruch 8,
**dadurch gekennzeichnet ,**
**dass** als das Kühlmittel verflüssigtes CO2 verwendet wird.

10. Verfahren nach Anspruch 8 oder 9,
**dadurch gekennzeichnet ,**
**dass** das verflüssigte CO2 mit einer Temperatur T mit 10°C ≤ T < TK, mit TK = kritische Temperatur, insbesondere TR ≤ T ≤ 30 °C, mit TR = Raumtemperatur, dem Kühlmittelzuführkanal (16) zugeführt wird.

11. Verfahren nach zumindest einem der Ansprüche 8 bis 10,
**dadurch gekennzeichnet ,**
**dass** das verflüssigte Gas dem Kühlmittelzuführkanal (18) mit einem Druck P mit 20 bar ≤ P ≤ 70 bar, insbesondere 20 bar ≤ P ≤ 60 bar zugeführt, wird.
